# EUROPÄISCHE PATENTSCHRIFT

(11) **EP 1 912 718 B1**
(45) Veröffentlichungstag und Bekanntmachung des Hinweises auf die Patenterteilung: **25.02.2009**
(21) Anmeldenummer: 06764205.8
(22) Anmeldetag: 19.07.2006
(51) Int. Cl.: B01D 35/153

(54) **FILTERANORDNUNG FÜR FLÜSSIGKEITEN**
FILTER ARRANGEMENT FOR LIQUIDS
ENSEMBLE FILTRE A LIQUIDES

(30) Priorität: 04.08.2005 DE 202005012435 U
(43) Veröffentlichungstag der Anmeldung: 23.04.2008
(73) Patentinhaber: MANN + HUMMEL GMBH, D-71638 Ludwigsburg (DE)
(72) Erfinder: KOLCZYK, Markus, 74395 Mundelsheim (DE); DAPPER-SAALFELS, Marc, 74182 Obersulm (DE)
(86) Internationale Anmeldenummer: PCT/EP2006/064404
(87) Internationale Veröffentlichungsnummer: WO 2007/014852

(56) Entgegenhaltungen:
- EP-A- 1 671 691
- FR-A- 2 296 454
- US-A- 3 369 666
- US-B1- 6 936 162

## Beschreibung

### Technisches Gebiet

Die Erfindung betrifft eine Filteranordnung für Flüssigkeiten, insbesondere für Öl oder Kraftstoff einer Brennkraftmaschine, nach dem Oberbegriff des Hauptanspruchs.

### Stand der Technik

Filterelemente für die Flüssigfiltration von viskosen Medien wie Öl oder Kraftstoff werden in herkömmlicher Weise aus plissierten Filtermedien vorzugsweise in zylindrischer Form hergestellt. Dies sind üblicherweise Wechselfilter, die in der Regel bei der Montage über einen Gewindeanschluss mit dem Anschraubkopf in einem Filtergehäuse verbunden werden und dann axial abdichten. Die Ausführungen mit einem Mittelrohr zur Aufnahme der Filterelemente sind oft so gestaltet, dass die gegenseitige Abdichtung der Roh- und Reinseite in der Strömung des zu filternden Mediums durch einen auf das Mittelrohr aufgezogenen O-Ring erfolgt, wobei dieser dann bei einem Service gewechselt werden kann.

Es ist beispielsweise aus der DE 100 46 494 A bekannt, bei einem Ölfilter für die Reinigung des Öls einer Brennkraftmaschine ein metallfreies Filterelement zu verwenden. Dieses Filterelement wird in ein Gehäuse eingeschoben und das Gehäuse mit einem Deckel verschlossen. In dem Gehäuse ist zur Verringerung des Ölrücklaufs beim Stillstand der Brennkraftmaschine üblicherweise ein Rücklaufsperrventil vorgesehen. Hier ist mindestens eine Dichtung am Filterelement derart angeordnet, dass sie in einem vorgegebenen axialen Bewegungsbereich dichtend an einer Gehäusewand des Filtergehäuses anliegt.

Beispielsweise ist in der DE 41 40 140 A eine weitere Filteranordnung für Kraft- und/oder Schmierstoffe eines Verbrennungsmotors beschrieben, bei der neben einer Rückaufsperrmembran für die zuströmende Rohflüssigkeit auch ein federbelastetes Rücklaufsperrventil für die Reinseite der ausströmenden Flüssigkeit vorgesehen ist, das ein Leerlaufen des Filters bei einem Nichtbetrieb verhindert.
Die Verwendung von Schnabelventilen in Ölfiltern ist beispielsweise aus der FR2296454, der US3,369,666 und der nachveröffentlichten EP1671691 bekannt.

### Offenbarung der Erfindung

Die erfindungsgemäße Filteranordnung für Flüssigkeiten ist gattungsgemäß mit einem zylindrischen Filterelement versehen, das axial in ein Filtergehäuse einführbar ist, wobei das Filterelement nach der Montage den Verschluss mindestens einer Rücklaufvorrichtung für die zu filternde Rohflüssigkeit mit mindestens einer im Filtergehäuse vorhandenen Dichtung bewirkt. In vorteilhafter Weise ist die erfindungsgemäße Dichtung als Schnabelventil ausgebildet, das am Filterelement gehalten ist und ein Rücklaufen sowohl der Rohflüssigkeit als auch der Reinflüssigkeit des Filterelements verhindert. Die zu filternden Flüssigkeiten können beispielsweise die Kraft- und/oder Schmierstoffe für einen Verbrennungsmotor in einem Kraftfahrzeug oder auch Wasser sein.

Bevorzugt ist das Schnabelventil ein Elastomerteil, das die Funktion der herkömmlichen einteiligen Rücklaufsperrmembran mit einem Schnabelventil zu einem gemeinsamen Teil kombiniert. Das Schnabelventil kann dabei in jeder Hinsicht als Auslaufschutz für die im Filterelement gehaltene Flüssigkeit dienen. Das Elastomerteil gibt erfindungsgemäß mit einem Teil in Zuströmrichtung der Rohflüssigkeit eine Öffnung frei und mit einem anderen Teil wird durch eine vorgegebene Winkelstellung der hier vorhandenen Dichtungslappen in Abströmrichtung der Reinflüssigkeit der Ablauf bei einer Demontage verschlossen und nach einer Montage wird die Öffnung durch mechanische Einwirkung des Filtergehäuses oder durch den Druck der Reinflüssigkeit freigegeben.

Bei einer ersten Ausführungsform sind die Dichtungslappen gegen die Richtung des Flusses der Reinflüssigkeit angewinkelt und bei einer Montage ist durch die mechanische Einwirkung des Filtergehäuses, an dem das Filterelement angebracht ist, eine Öffnung der Winkelstellung und damit des Schnabelventils bewirkbar. Die mechanische Einwirkung kann in vorteilhafter Weise durch einen am unteren Teil des Filtergehäuses gehaltenen Anschraubnippel bewirkt werden, der die Dichtungslappen bei der Montage durchstößt. Beim Ausbau des Wechselfilters schließt dann das Schnabelventil wieder, wodurch ein Auslaufen der Flüssigkeit verhindert wird.

Gemäß einer anderen Ausführungsform sind die Dichtungslappen in Richtung des Flusses der Reinflüssigkeit angewinkelt und eine Öffnung der Winkelstellung und damit des Schnabelventils ist durch den Druck des Flusses der Reinflüssigkeit bewirkbar.

Zusammenfassend ist festzustellen, dass beispielsweise bei einem Ölfilter in einem Kraftfahrzeug ein Auslaufen des Öls aus dem Wechselfilter bei einer Demontage verhindert wird. Das bisher eingesetzte Federventil als reinölseitige Rücklaufsperre kann entfallen, was zu erheblichen Kosteneinsparungen führt. Beide erfindungsgemäßen Ausführungsformen schützen somit auch die Reinseite des Filters vor Verschmutzungen beim Transport und bei der Montage.

### Kurze Beschreibung der Zeichnungen

Ausführungsbeispiele der erfindungsgemäßen Filteranordnung werden anhand der Figuren der Zeichnung erläutert. Es zeigen:

- Figur 1: einen Schnitt durch einen prinzipiellen Aufbau einer Filteranordnung für Flüssigkeiten nach dem Stand der Technik,

- Figur 2: eine schematische Darstellung der Roh- und Reinseite der Filteranordnung mit dem erfindungsgemäßen Schnabelventil gemäß einer ersten Ausführungsform und

- Figur 3: eine schematische Darstellung der Roh- und Reinseite der Filteranordnung mit dem erfindungsgemäßen Schnabelventil gemäß einer zweiten Ausführungsform.

### Ausführungsform(en) der Erfindung

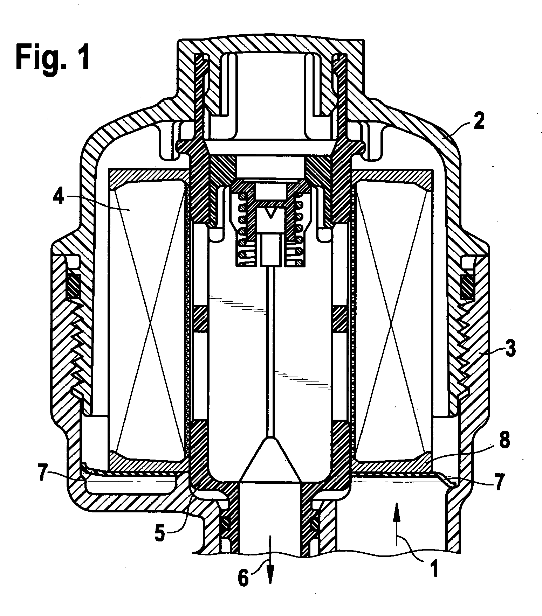

In Figur 1 ist eine Filteranordnung gezeigt, die prinzipiell der aus dem Stand der Technik DE 100 46 494 A1 bekannten Filteranordnung für Kraft- oder Schmierstoff für einen Verbrennungsmotor entspricht. Die zu filternde Rohflüssigkeit fließt durch einen Zulauf 1 in das Filtergehäuse ein, das aus einem Oberteil 2 und einem Unterteil 3 besteht. Im Filtergehäuse befindet sich ein Filterelement 4 aus zickzackförmig gefaltetem Filterpapier, das auf ein Mittelrohr 5 gesteckt ist und beim Zusammenfügen des Filtergehäuses fest eingespannt wird. Die Rohflüssigkeit durchströmt das Filterelement 4 und tritt auf der Reinseite durch das Mittelrohr 5 und durch den Ablauf 6 wieder aus.

Es ist hier eine Rücklaufsperrmembran 7 an einer Endscheibe 8 des Filterelements 4, beispielsweise aus einem Elastomer, angeordnet, die rohseitig den Flüssigkeitsstrom freigibt, jedoch bei einer Unterbrechung des Stroms, zum Beispiel bei einem Stillstand des Verbrennungsmotors, einen Rückstrom in den Zulaufkanal 1 durch axiale oder radiale Anlage der Membran am Filtergehäuse verhindert.

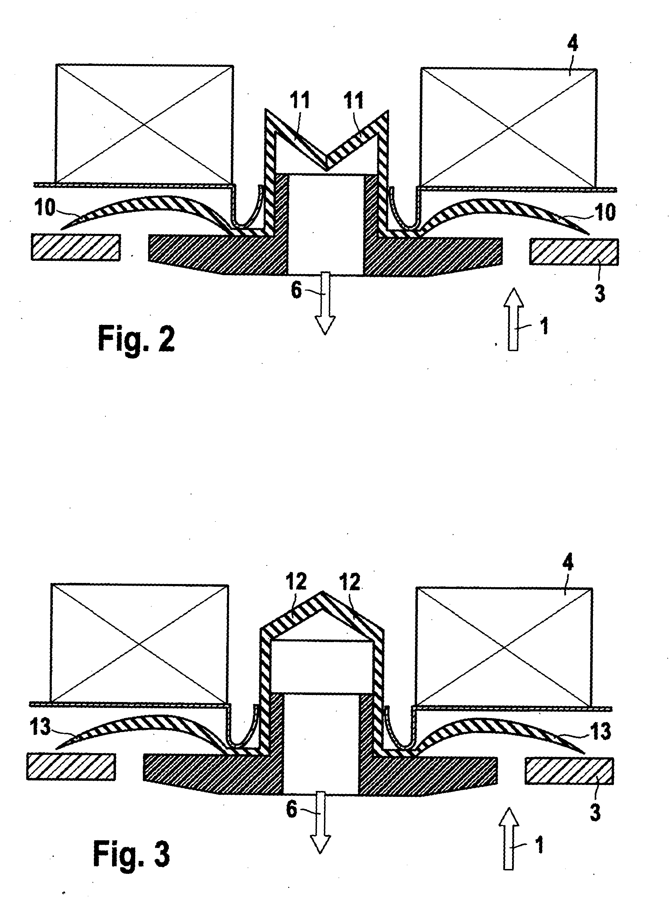

Figur 2 zeigt ein erstes Ausführungsbeispiel eines Schnabelventils 10, das an die Stelle der aus dem Stand der Technik bekannten Rucklaufsperrmembran tritt. Hier sind Dichtungslappen 11 des Schnabelventils 10 im Bereich des Austritts der Reinflüssigkeit in Richtung des Flusses der Reinflüssigkeit (Pfeil 6) angewinkelt und eine Öffnung der Winkelstellung und damit des Schnabelventils 10 ist durch den Druck des Flusses der Reinflüssigkeit bewirkbar.

Bei einem weiteren Ausführungsbeispiel nach Figur 3 sind Dichtungslappen 12 eines Schnabelventils 13 gegen die Richtung des Flusses der Reinflüssigkeit (Pfeil 6) angewinkelt und bei einer Montage ist durch die mechanische Einwirkung des Filtergehäuses 3, an dem das Filterelement angebracht ist, eine Öffnung der Winkelstellung und damit des Schnabelventils 13 bewirkbar. Die mechanische Einwirkung kann in vorteilhafter Weise durch einen am unteren Teil des Filtergehäuses 3 gehaltenen Anschraubnippel bewirkt werden, der (hier nicht dargestellt) die Dichtungslappen 12 bei der Montage durchstößt und somit die Dichtungslappen 12 derart aufstellt, dass der Fluss nicht behindert wird. Beim Ausbau des Wechselfilters und damit gleichzeitig mit dem Herausdrehen des Anschraubnippels, wodurch die flexiblen Dichtungslappen wieder abwinkeln, schließt dann das Schnabelventil 13 wieder und verhindert den Rücklauf der Reinflüssigkeit.

### Gewerbliche Anwendbarkeit

Die Erfindung ist beispielsweise bei Filteranordnung für Flüssigkeiten, insbesondere für Öl oder Kraftstoff einer Brennkraftmaschine für einen Personen- oder Lastkraftwagen bzw. einer sonstigen kraftstoffbetriebenen Maschine oder für Wasserfilter gewerblich anwendbar.

## Patentansprüche

1. Filteranordnung für Flüssigkeiten mit
- einem zylindrischen Filterelement (4), das axial in ein Filtergehäuse (2,3) einführbar ist, wobei das Filterelement (4) nach der Montage den Verschluss mindestens einer Rücklaufvorrichtung für die zu filternde Rohflüssigkeit mit mindestens einer im Filtergehäuse (2,3) gehaltenen Dichtung (7;10;13) bewirkt,
**dadurch gekennzeichnet, dass**
- die Dichtung (10), die ein Schnabelventil (10;13) mit einer Rücklaufsperrmembran, (12;13) zu einem gemeinsamen Teil kombiniert im Filtergehäuse (2,3) anordenbar ist und das Schnabelventil ein Rücklaufen der Reinflüssigkeit und die Rücklaufsperrmembran das Rücklaufen der Rohflüssigkeit des Filterelements (4) verhindert.

2. Filteranordnung nach Anspruch 1, **dadurch gekennzeichnet, dass** das Schnabelventil (10;13) ein Elastomerteil ist, das mit einem Teil in Zuströmrichtung (1) der Rohflüssigkeit eine Öffnung freigibt und mit einem anderen Teil durch eine vorgegebene Winkelstellung der hier vorhandenen Dichtungslappen (11,12) in Abströmrichtung der Reinflüssigkeit bei einer Demontage verschließt und nach einer Montage die Öffnung durch mechanische Einwirkung des Filtergehäuses oder durch den Druck der Reinflüssigkeit freigibt.

3. Filteranordnung nach Anspruch 2, **dadurch gekennzeichnet, dass** die Dichtungslappen (12) gegen die Richtung (6) des Flusses der Reinflüssigkeit angewinkelt sind und bei einer Montage durch die mechanische Einwirkung des Filtergehäuses, an dem das Filterelement (4) angebracht ist, eine Öffnung der Winkelstellung und damit des Schnabelventils (13) bewirkbar ist.

4. Filteranordnung nach Anspruch 3, **dadurch gekennzeichnet, dass** die mechanische Einwirkung durch einen am unteren Teil (3) des Filtergehäuses gehaltenen Anschraubnippel bewirkt wird, der die Dichtungslappen (12) bei der Montage durchstößt, sodass beim Ausbau des Wechselfilters das Schnabelventil wieder schließt.

5. Filteranordnung nach Anspruch 2, **dadurch gekennzeichnet, dass** die Dichtungslappen (11) in Richtung (6) des Flusses der Reinflüssigkeit angewinkelt sind und eine Öffnung der Winkelstellung und damit des Schnabelventils (10) durch den Druck des Flusses der Reinflüssigkeit bewirkbar ist.

6. Filteranordnung nach einem der vorhergehenden Ansprüche, **dadurch gekennzeichnet, dass** die zu filternden Flüssigkeiten die Kraft- und/oder Schmierstoffe für einen Verbrennungsmotor in einem Kraftfahrzeug sind.

## Claims

1. Filter assembly for liquids with
― a cylindrical filter element (4) which can be axially inserted into a filter housing (2, 3), with the filter element (4) causing - after the assembly - the closure of at least one return device for the liquid to be filtered with at least one sealing (7; 10; 13) held in the filter housing (2, 3), **characterized in that**
― the sealing (10), which combines a duck bill valve (10; 13) with a return stop diaphragm (12; 13) into a common piece, can be placed in the filter housing (2, 3) and that the duck bill valve prevents the return of the filtered liquid and the return stop diaphragm the return of the unfiltered liquid of the filter element (4).

2. Filter assembly according to claim 1, **characterized in that** the duck bill valve (10; 13) is an elastomer part which releases an opening with one part in the inflow direction (1) of the unfiltered liquid and closes it during disassembly in the flow-off direction of the filtered liquid with another part by means of a fixed angular position of the sealing tabs (11, 12) provided here and after assembly releases the opening by mechanical action of the filter housing or by the pressure of the filtered liquid.

3. Filter assembly according to claim 2, **characterized in that** the sealing tabs (12) are angled against the flow direction (6) of the filtered liquid and that - in the case of an assembly - through the mechanical action of the filter housing to which the filter element (4) is affixed an opening of the angular position and therefore of the duck bill valve (13) can be caused.

4. Filter assembly according to claim 3, **characterized in that** the mechanical action is caused by a screwed nipple held at the lower part (3) of the filter housing which penetrates the sealing tabs (12) during assembly, causing the duck bill valve to be closed during the disassembly of the spin-on filter.

5. Filter assembly according to claim 2, **characterized in that** the sealing tabs (11) are angled in the flow direction (6) of the filtered liquid and that through the pressure of the flow of the filtered liquid an opening of the angular position and therefore of the duck bill valve (13) can be caused.

6. Filter assembly according to one of the above-mentioned claims, **characterized in that** the liquids to be filtered are fuels and/or lubricants for an internal combustion engine in a motor vehicle.

## Revendications

1. Système de filtre pour liquides, avec
― un élément filtrant cylindrique (4) qui peut être introduit axialement dans un boîtier de filtre (2, 3), l'élément filtrant (4) accomplissant après le montage la fermeture d'au moins un dispositif de retour pour le liquide brut à filtrer, avec au moins un joint d'étanchéité (7 ; 10 ; 13) tenu dans le boîtier de filtre (2, 3),
**caractérisé en ce que**
― le joint d'étanchéité (10), qui combine une soupape à bec (10 ; 13) avec une membrane anti-retour (12 ; 13) en une pièce commune, peut être placé dans le boîtier de filtre (2, 3) et que la soupape à bec empêche un retour du liquide purifié, tandis que la membrane anti-retour empêche le retour du liquide brut de l'élément filtrant (4).

2. Système de filtre selon la revendication 1, **caractérisé en ce que** la soupape à bec (10 ; 13) est une pièce en élastomère qui, avec une partie, libère une ouverture dans la direction d'arrivée (1) du liquide brut et, avec une autre partie, se ferme, en cas de démontage, dans la direction d'écoulement du liquide purifié par le biais d'une position angulaire prédéterminée des pattes d'étanchéité (11, 12) prévues ici et, après un montage, libère l'ouverture par un effet mécanique du boîtier de filtre ou par la pression du liquide purifié.

3. Système de filtre selon la revendication 2, **caractérisé en ce que** les pattes d'étanchéité (12) sont coudées en sens inverse de la direction (6) du flux du liquide purifié et que, en cas de montage, une ouverture de la position angulaire, et donc de la soupape à bec (13), peut être provoquée par l'effet mécanique du boîtier de filtre sur lequel est placé l'élément filtrant (4).

4. Système de filtre selon la revendication 3, **caractérisé en ce que** l'effet mécanique est provoqué par un raccord vissé tenu sur la partie inférieure (3) du boîtier de filtre, raccord qui transperce les pattes d'étanchéité (12) lors du montage, de sorte que la soupape à bec se referme lors du démontage du filtre à cartouche remplaçable.

5. Système de filtre selon la revendication 2, **caractérisé en ce que** les pattes d'étanchéité (11) sont coudées dans la direction (6) du flux du liquide purifié et qu'une ouverture de la position angulaire, et donc de la soupape à bec (10), peut être provoquée par la pression du flux de liquide purifié.

6. Système de filtre selon l'une des revendications précédentes, **caractérisé en ce que** les liquides à filtrer sont les carburants et/ou les lubrifiants pour un moteur à combustion interne dans un véhicule.
